# EUROPEAN PATENT APPLICATION

(11) **EP 2 568 104 A1**
(43) Date of publication of application: **13.03.2013**
(21) Application number: 12161442.4
(22) Date of filing: 27.03.2012
(51) Int. Cl.: E06B 3/46, E06B 3/968

(54) **Corner key and frame assembly thereof**

(30) Priority: 08.09.2011 TW 100132495
(71) Applicant: AU Optronics Corp., Hsin-Chu 300 (TW)
(72) Inventor: Tseng, Huang-Chi, 300 Hsin-Chu (TW); Wang, Yao-Chang, 300 Hsin-Chu (TW); Chung, Yao-Hsien, 300 Hsin-Chu (TW); Lin, Wei-Ting, 300 Hsin-Chu (TW)
(74) Representative: Becker Kurig Straus

(57) **Abstract**

A corner key (32) includes a first arm portion (321), a first engaging portion (325), a second arm portion (322), and a second engaging portion (326). The first arm portion (321) has a first outer side-surface (3210). The first engaging portion (325) is disposed on the first outer side-surface (3210). The second arm portion (322) is connected to the first arm portion (321) and has a second outer side-surface (3220). The second outer side-surface (3220) is unparallel to the first outer side-surface (3210). The second engaging portion (326) is disposed on the second outer side-surface (3220).

## Description

### Field of the Invention

The present invention relates to a corner key having first and second arm portions, of which outer side-surfaces are unparallel to each other, and a frame assembly thereof according to the pre-characterizing clauses of claims 1 and 8.

### Background of the Invention

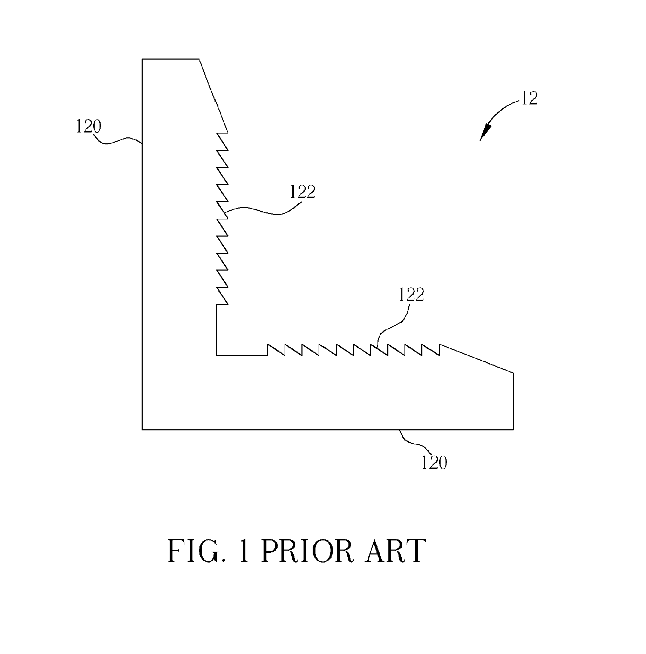

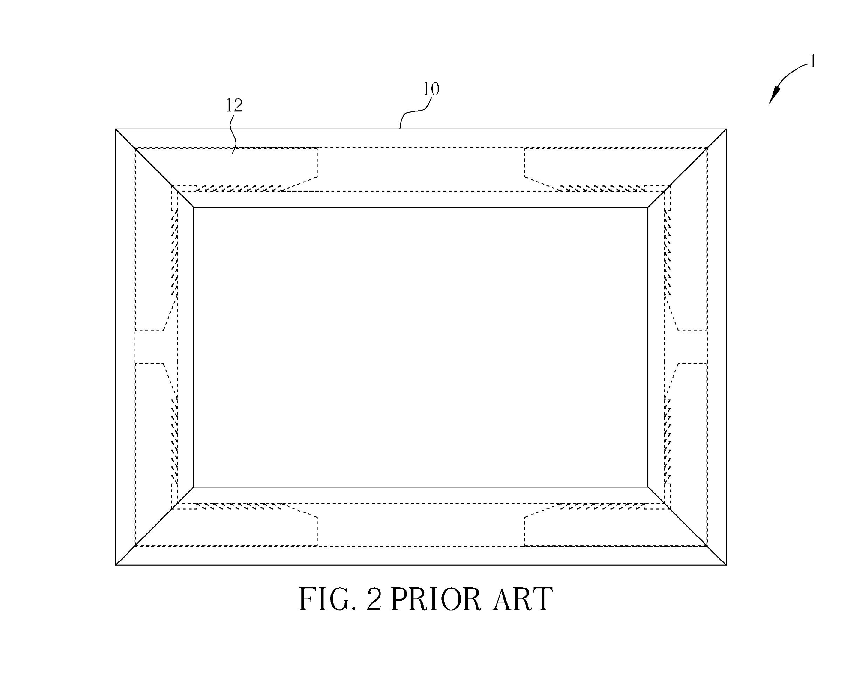

Please refer to FIG. 1 and FIG. 2. FIG. 1 is a diagram of a corner key 12 according to the prior art. FIG. 2 is a diagram of a frame assembly 1 utilizing the corner key 12 in FIG. 1. As shown in FIG. 1, the corner key 12 includes two bodies 120 which are connected to each other and form an L-shaped structure cooperatively. A tooth structure 122 is disposed on a surface of each body 120 respectively. As shown in FIG. 2, the frame assembly 1 includes four side frames 10 and four corner keys 12. Each two adjacent side frames 10 are assembled with one corner key 12 respectively.

In general, the corner key 12 is usually manufactured by an aluminum extrusion process. The aluminum extrusion process is a manufacturing process with larger tolerances (concerning precision of an aluminum extrusion machine), and an anode treatment and a cutting process need to be performed on the side frame 10 during the aluminum extrusion process. Since the side frame 10 usually has burrs after being cut, assembly of the corner key 12 and the side frame 10 is usually performed in a force fitting manner, and the sizes of the side frame 10 and the corner key 12 vary with different mold abrasion occurring in the aluminum extrusion process, it may cause a difficult assembly process. Furthermore, during the assembly process of the side frame 10 and the corner key 12, an included-angle error between the two bodies 120 of each corner key 12 and a displacement difference between the side frame 10 and the corner key 12 occurring in the assembly process may cause excessive assembly force to be applied to the corner key 12. Accordingly, not only may the tooth structure 122 of the corner key 12 and the related tools be damaged easily, but assembly precision of the side frame 10 and the corner key 12 may also be influenced, reducing the production capacity of the frame assembly and increasing the maintenance and replacement cost of the related process apparatuses.

### Summary of the Invention

This in mind, the present invention aims at providing a corner key having first and second arm portions, of which outer side-surfaces are unparallel to each other, so that the first arm portion and the second arm portion can grip an inner hole of a side frame tightly due to elastic force provided by the first arm portion and the second arm portion after the assembly process of the side frame and the corner key is completed.

This is achieved by a corner key and a frame assembly thereof according to claims 1 and 8. The dependent claims pertain to corresponding further developments and improvements.

As will be seen more clearly from the detailed description following below, the claimed corner key includes a first arm portion, a first engaging portion, a second arm portion, and a second engaging portion. The first arm portion has a first outer side-surface. The first engaging portion is disposed on the first outer side-surface. The second arm portion is connected to the first arm portion and has a second outer side-surface. The second outer side-surface is unparallel to the first outer side-surface. The second engaging portion is disposed on the second outer side-surface.

The claimed frame assembly includes a first side frame and a corner key. The first side frame has a first inner hole. The corner key includes a first arm portion, a first engaging portion, a second engaging portion, and a second engaging portion. The first arm portion has a first outer side-surface. The first engaging portion is disposed on the first outer side-surface. The second arm portion is connected to the first arm portion and has a second outer side-surface. The second outer side-surface is unparallel to the first outer side-surface. The second engaging portion is disposed on the second outer side-surface. The first arm portion and the second arm portion are used for assembling into the first inner hole.

### Brief Description of the Drawings

In the following, the invention is further illustrated by way of example, taking reference to the accompanying drawings thereof:
FIG. 1 is a diagram of a corner key according to the prior art,
FIG. 2 is a diagram of a frame assembly utilizing the corner key in FIG. 1,
FIG. 3 is a diagram of a corner key according to an embodiment of the present invention,
FIG. 4 is a diagram of a frame assembly utilizing the corner key in FIG. 3,
FIG. 5 is a diagram of the corner key in FIG. 3 being assembled into a first side frame,
FIG. 6 is a diagram of a corner key according to another embodiment of the present invention,
FIG. 7 is a diagram of a corner key according to another embodiment of the present invention, and
FIG. 8 is a diagram of a corner key according to another embodiment of the present invention.

### Detailed Description

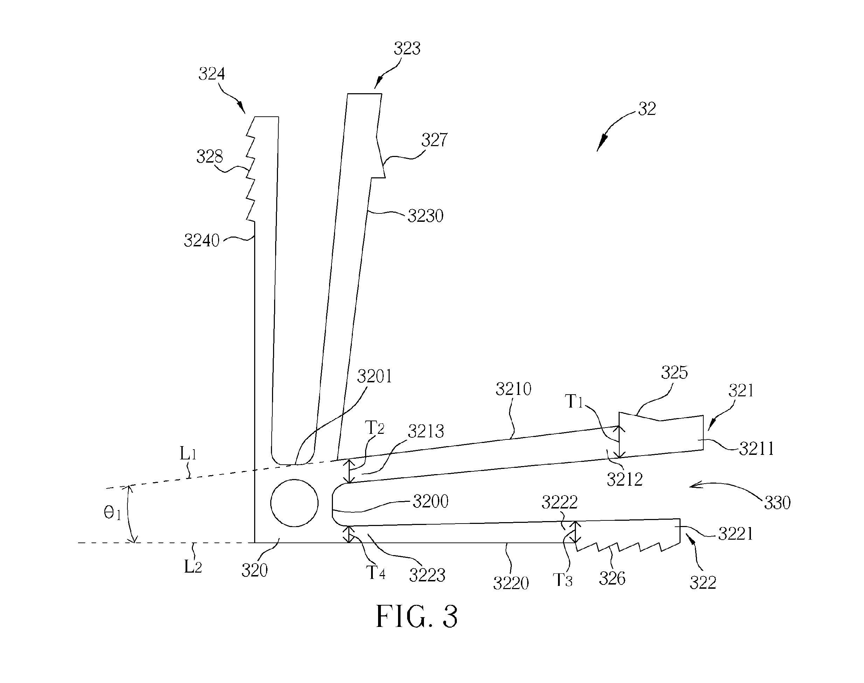

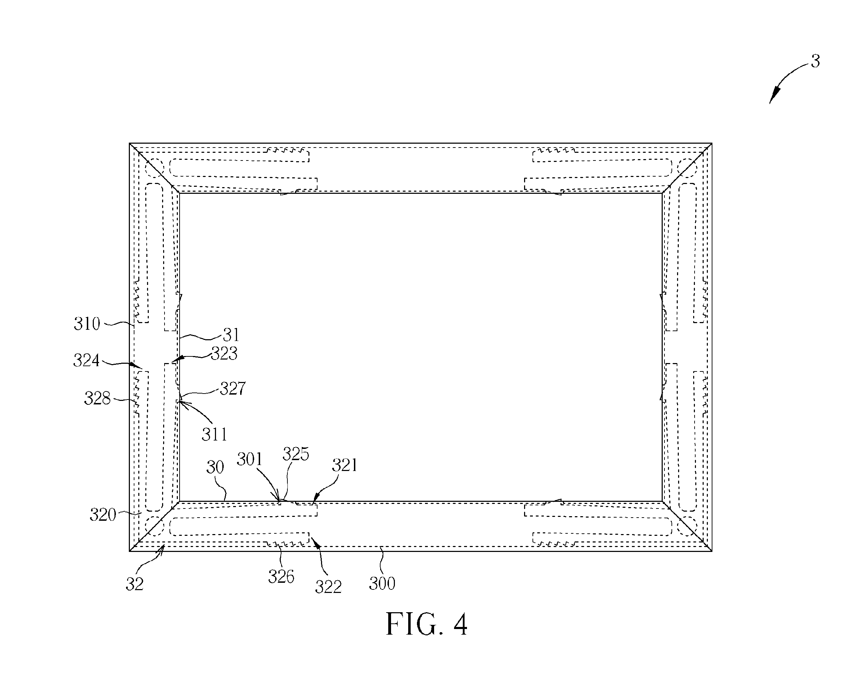

Please refer to FIG. 3 and FIG. 4. FIG. 3 is a diagram of a corner key 32 according to an embodiment of the present invention. FIG. 4 is a diagram of a frame assembly 3 utilizing the corner key 32 in FIG. 3. As shown in FIG. 3, the corner key 32 includes a corner structure 320, a first arm portion 321, a second arm portion 322, a third arm portion 323, a fourth arm portion 324, a first engaging portion 325, a second engaging portion 326, a third engaging portion 327, and a fourth engaging portion 328. The first arm portion 321 and the second arm portion 322 extend from a side surface 3200 of the corner structure 320 respectively, and the third arm portion 323 and the fourth arm portion 324 extend from another side surface 3201 of the corner structure 320 respectively. In other words, the second arm portion 322 and the fourth arm portion 324 are connected to the first arm portion 321 and the third arm portion 323 respectively via the corner structure 320. The first arm portion 321 has a first outer side-surface 3210. The second arm portion 322 has a second outer side-surface 3220. The third arm portion 323 has a third outer side-surface 3230. The fourth arm portion 324 has a fourth outer side-surface 3240. The first outer side-surface 3210 is unparallel to the second outer side-surface 3220. The third outer side-surface 3230 is unparallel to the fourth outer side-surface 3240. The first engaging portion 325 is disposed on the first outer side-surface 3210. The second engaging portion 326 is disposed on the second outer side-surface 3220. The third engaging portion 327 is disposed on the third outer side-surface 3230. The fourth engaging portion 328 is disposed on the fourth outer side-surface 3240.

As shown in FIG. 4, the frame assembly 3 includes two first side frames 30, two second side frames 31, and four corner keys 32. The first side frame 30 has a first inner hole 300, and the second side frame 31 has a second inner hole 310. The first arm portion 321 and the second arm portion 322 of the corner key 32 are used for assembling into the first inner hole 300 of the first side frame 30, and the third arm portion 323 and the fourth arm portion 324 of the corner key 32 are used for assembling into the second inner hole 310. In this embodiment, the first side frame 30 further has a first engaging slot 301, and the second side frame 31 further has a second engaging slot 311. Accordingly, when the first arm portion 321 is assembled into the first inner hole 300, the first engaging portion 325 is engaged with the first engaging slot 301, and when the third arm portion 323 is assembled into the second inner hole 310, the third engaging portion 327 is engaged with the second engaging slot 311. In such a manner, assembly of the corner key 32, the first side frame 30, and the second side frame 31 can be more firm. In other words, the first side frames 30 and the adjacent second side frame 31 are assembled to each other by one corner key 32.

In this embodiment, the structures of the third arm portion 323, the fourth arm portion 324, the third engaging portion 327, and the fourth engaging portion 328 are substantially identical to the structures of the first arm portion 321, the second arm portion 322, the first engaging portion 325, and the second engaging portion 326. Thus, only the structural designs of the first arm portion 321, the second arm portion 322, the first engaging portion 325, and the second engaging portion 326 are described in detail as follows for simplicity.

As shown in FIG. 3, the first engaging portion 325 is located at a first head end 3211 of the first arm portion 321. The first arm portion 321 has a first section 3212 close to the first engaging portion 325 and a second section 3213 away from the first engaging portion 325. A thickness T₁ of the first section 3212 is greater than a thickness T₂ of the second section 3213. The second engaging portion 326 is located at a second head end 3221 of the second arm portion 322. The second arm portion 322 has a third section 3222 close to the second engaging portion 326 and a fourth section 3223 away from the second engaging portion 326. A thickness T₃ of the third section 3222 is greater than a thickness T₄ of the fourth section 3223. Accordingly, the first arm portion 321 and the second arm portion 322 can be more flexible, so that excessive interference of the first engaging portion 325, the second engaging portion 326 and the first inner hole 300 of the first side frame 30 can be avoided. In this embodiment, the second engaging portion 326 is a tooth structure that is inverted-tooth shaped and the first engaging portion 325 is a hook structure that is inverted-tooth shaped, but the structural designs of the second engaging portion 326 and the first engaging portion 325 are not limited thereto. For example, the first engaging portion 325 can also be a tooth structure that is inverted-tooth shaped. Furthermore, an angle θ₁ between a first extending line L₁ of the first outer side-surface 3210 and a second extending line L₂ of the second outer side-surface 3220 is preferably greater than 0° and less than or equal to 30°.

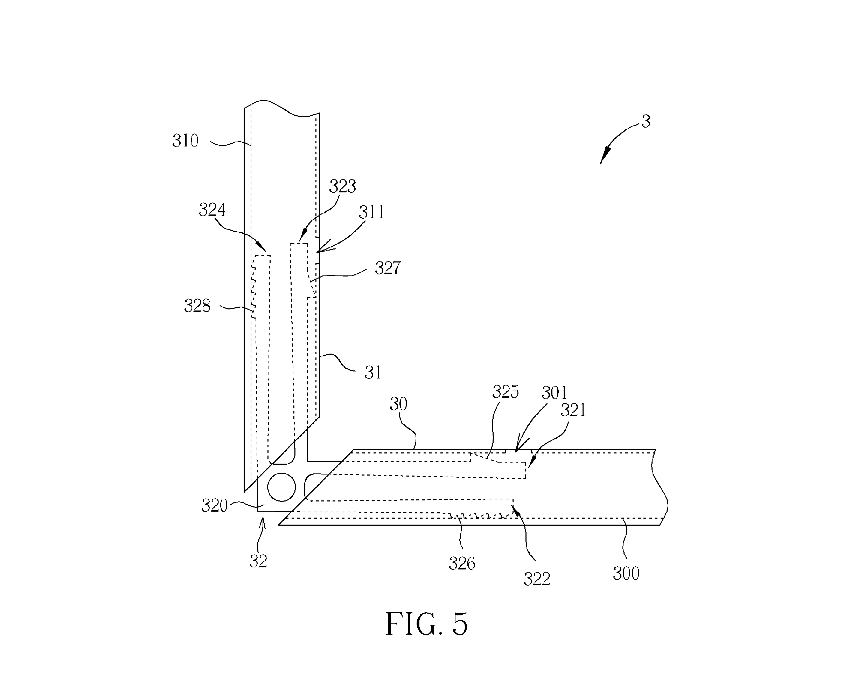

More detailed description for assembly of the first side frame 30 and the corner key 32 is provided as follows. Please refer to FIG. 4 and FIG. 5. FIG. 5 is a diagram of the corner key 32 in FIG. 3 being assembled into the first side frame 30. As shown in FIG. 4 and FIG. 5, during the assembly process of assembling the first arm portion 321 and the second arm portion 322 of the corner key 32 into the first inner hole 300 of the first side frame 30, the first engaging portion 325 and the second engaging portion 326 are compressed by the inner wall of the first inner hole 300, so as to make the first arm portion 321 bend inwardly (as shown in FIG. 5). Accordingly, poor assembly quality of the frame assembly 3 or damage of the first engaging portion 325 caused by excessive interference of the first engaging portion 325 and the first inner hole 300 of the first side frame 30 can be avoided. Subsequently, when the first engaging portion 325 moves inward relative to the first inner hole 300 to a position corresponding to the first engaging slot 301, the first engaging portion 325 is driven to be engaged with the first engaging slot 301 by elastic force provided by the first arm portion 321, so as to complete assembly of the first side frame 30 and the corner key 32.

After assembly of the first side frame 30 and the corner key 32 is completed, the first engaging portion 325 and the second engaging portion 326 may generate a self-tightening force due to elastic force provided by the first arm portion 321 and the second arm portion 322, so as to grip the first engaging slot 301 and the first inner hole 300 of the first side frame 30 tightly. Accordingly, after assembly of the first side frame 30 and the corner key 32 is completed, there is no need to additionally utilize a mounting process to make the first engaging portion 325 and the second engaging portion 326 grip the first side frame 30 tightly.

As for assembly of the second side frame 31 and the corner key 32, it can be substantially identical to assembly of the first side frame 30 and the corner key 32. In brief, when the third engaging portion 327 moves inward relative to the second inner hole 310 to a position corresponding to the second engaging slot 311, the third engaging portion 327 is driven to be engaged with the second engaging slot 311 by elastic force provided from the third arm portion 323, so as to complete assembly of the second side frame 31 and the corner key 32.

Similarly, after assembly of the second side frame 31 and the corner key 32 is completed, the third engaging portion 327 and the fourth engaging portion 328 may generate a self-tightening force due to elastic force provided from the third arm portion 323 and the fourth arm portion 324 so as to grip the second engaging slot 311 and the second inner hole 310 of the second side frame 31 tightly. Accordingly, after the assembly process of the second side frame 31 and the corner key 32 is completed, there is no need to additionally utilize a mounting process to make the third engaging portion 327 and the fourth engaging portion 328 grip the second side frame 31 tightly.

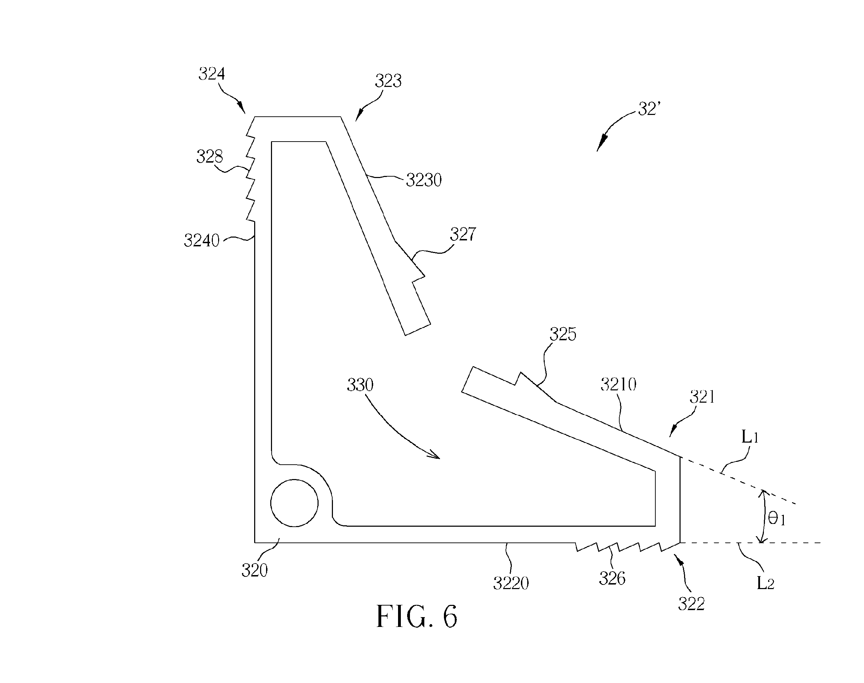

Please refer FIG. 6, which is a diagram of a corner key 32' according to another embodiment of the present invention. A major difference between the corner key 32' and the corner key 32 is the structural design of the first arm portion 321. In this embodiment, the structures of the third arm portion 323 and the fourth arm portion 324 are substantially identical to the structures of the first arm portion 321 and the second arm portion 322. Thus, only the structural designs of the first arm portion 321 and the second arm portion 322 are described in details as follows for simplicity. In this embodiment, the second arm portion 322 extends from the corner structure 320, and the first arm portion 321 extends from the second arm portion 322 and bends toward the corner structure 320. The first arm portion 321 has the first outer side-surface 3210, and the second arm portion 322 has the second outer side-surface 3220. The first outer side-surface 3210 is unparallel to the second outer side-surface 3220. The first engaging portion 325 is located at the first head end 3211 of the first arm portion 321, and the second engaging portion 326 is located at the second head end 3221 of the second arm portion 322.

To be more specific, in this embodiment, the first arm portion 321 utilizes the second section 3213 away from the first engaging portion 325 to be connected to the second head end 3221 of the second arm portion 322 instead, so that the first arm portion 321 can extend from the second arm portion 322 and bend toward the corner structure 320 accordingly. In such a manner, instead of the design in which an opening 330 formed by the first arm portion 321 and the second arm portion 322 in FIG. 3 is away from the corner structure 320, the corner key 32' utilizes the design in which the opening 330 is close to the corner structure 320 and the design in which the angle θ₁ between the first extending line L₁ extending from the second section 3213 and the second extending line L₂ extending from the second head end 3221 is greater than 0° and less than or equal to 30° to make the first arm portion 321 and the second arm portion 322 in FIG. 6 capable of assembling into the first inner hole 300 more easily. Thus, assembly convenience of the corner key 32' and the first side frame 30 can be further enhanced. Other related descriptions can be reasoned by analogy according to the aforesaid embodiment and therefore omitted herein.

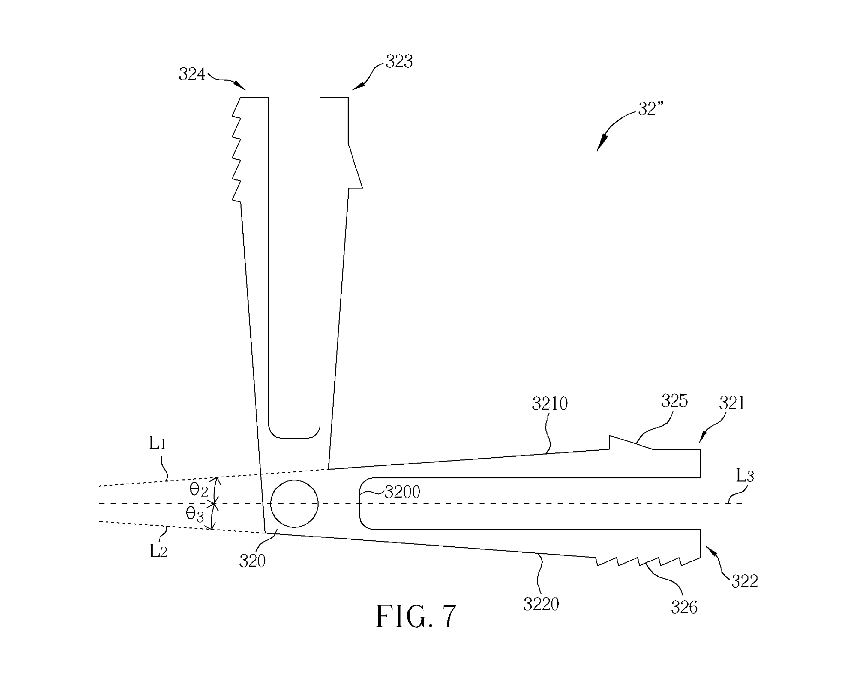

Please refer to FIG. 7, which is a diagram of a corner key 32" according to another embodiment of the present invention. A major difference between the corner key 32" and the corner key 32 is the structural design of the first arm portion 321, the second arm portion 322, and the corner structure 320. In this embodiment, the structures of the third arm portion 323 and the fourth arm portion 324 are substantially identical to the structures of the first arm portion 321 and the second arm portion 322. Thus, only the structural designs of the first arm portion 321 and the second arm portion 322 are described in detail as follows for simplicity.

In this embodiment, an angle θ₂ between the first extending line L₁ of the first outer side-surface 3210 of the first arm portion 321 and a normal line L₃ of the side surface 3200 of the corner structure 320 is greater than 0° and less than or equal to 15°, and an angle θ₃ between the second extending line L₂ of the second outer side-surface 3220 of the second arm portion 322 and a normal line L₃ of the side surface 3200 of the corner structure 320 is greater than 0° and less than or equal to 15°. Other related designs in this embodiment can be reasoned by analogy according to the aforesaid embodiments and are therefore omitted herein.

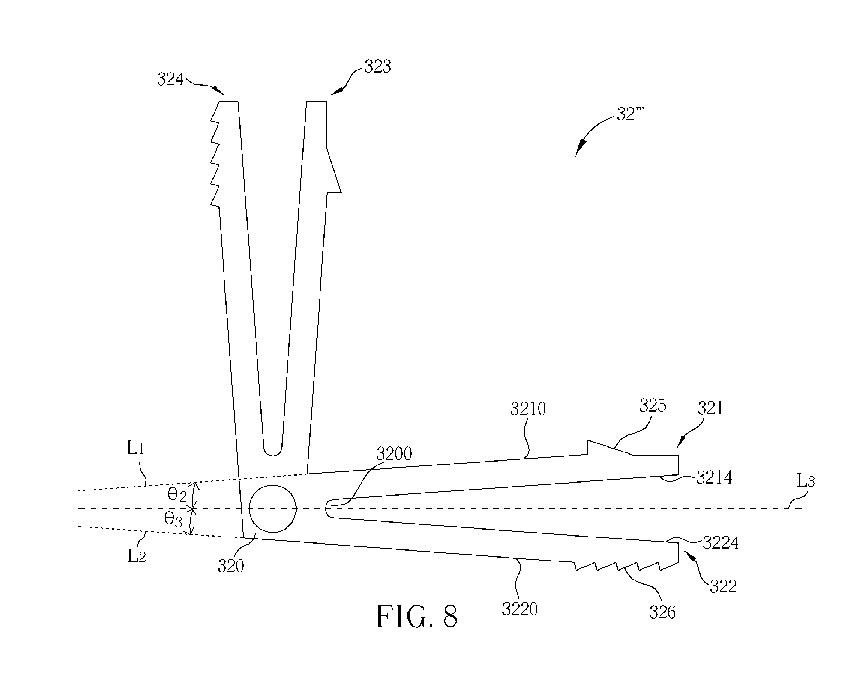

Please refer to FIG. 8, which is a diagram of a corner key 32"' according to another embodiment of the present invention. A major difference between the corner key 32"' and the corner key 32" is the side-surface designs of the first arm portion 321 and the second arm portion 322. In this embodiment, the structures of the third arm portion 323 and the fourth arm portion 324 are substantially identical to the structures of the first arm portion 321 and the second arm portion 322. Thus, only the structural designs of the first arm portion 321 and the second arm portion 322 are described in detail as follows for simplicity. In this embodiment, the first arm portion 321 further has a first inner side-surface 3214, and the first inner side-surface 3214 is parallel to the first outer side-surface 3210. The second arm portion 322 further has a second inner side-surface 3224, and the second inner side-surface 3224 is parallel to the second outer side-surface 3220. As for other related designs in this embodiment, it can be reasoned by analogy according to the aforesaid embodiments and therefore omitted herein.

Compared with the prior art, the present invention utilizes the design that the outer side-surfaces of the first and second arm portions of the corner key are unparallel to each other. After the assembly process of the side frame and the corner key is completed, the first engaging portion and the second engaging portion of the corner key can generate a self-tightening force due to elastic force of metal provided by the first arm portion and the second arm portion so as to grip the inner hole of the side frame tightly. In such a manner, after the assembly process of the side frame and the corner key is completed, there is no need to additionally utilize a mounting process to make the interference between the corner key and the side frame.

## Claims

1. A corner key (32) **characterized by**: the corner key (32) comprising:
a first arm portion (321) having a first outer side-surface (3210);
a first engaging portion (325) disposed on the first outer side-surface (3210);
a second arm portion (322) connected to the first arm portion (321) and
having a second outer side-surface (3220), the second outer side-surface (3220) being unparallel to the first outer side-surface (3210); and
a second engaging portion (326) disposed on the second outer side-surface (3220).

2. The corner key (32) of claim 1 **characterized in that** an angle between a first extending line of the first outer side-surface (3210) and a second extending line of the second outer side-surface (3220) is greater than 0° and less than or equal to 30°.

3. The corner key (32) of claim 1 **characterized in that** the first engaging portion (325) is located at a first head end (3211) of the first arm portion (321), the first arm portion (321) has a first section (3212) close to the first engaging portion (325) and a second section (3213) away from the first engaging portion (325), a thickness of the first section (3212) is greater than a thickness of the second section (3213), the second engaging portion (326) is located at a second head end (3221) of the second arm portion (322), the second arm portion (322) has a third section (3222) close to the second engaging portion (326) and a fourth section (3223) away from the second engaging portion (326), and a thickness of the third section (3222) is greater than a thickness of the fourth section (3223).

4. The corner key of claim 1 **characterized in that** the corner key further comprises:
a corner structure (320), the first arm portion (321) and the second arm
portion (322) extending from the corner structure (320) respectively, an angle between a first extending line of the first outer side-surface (3210) and a normal line of a side surface (3200) of the corner structure (320) being greater than 0° and less than or equal to 15°, and an angle between a second extending line of the second outer side-surface (3220) and the normal line being greater than 0° and less than or equal to 15°.

5. The corner key of claim 1 **characterized in that** the corner key further comprises:
a corner structure (320), the second arm portion (322) extending from the
corner structure (320), and the first arm portion (321) extending from the second arm portion (322) and bending toward the corner structure (320), an angle between a first extending line of the first outer side-surface (3210) and a normal line of a side surface (3200) of the corner structure (320) being greater than 0° and less than or equal to 15°, and an angle between a second extending line of the second outer side-surface (3220) and the normal line being greater than 0° and less than or equal to 15°.

6. The corner key of claim 1 **characterized in that** the first arm portion (321) further has a first inner side-surface (3214), the first inner side-surface (3214) is parallel to the first outer side-surface (3210), the second arm portion (322) further has a second inner side-surface (3224), and the second inner side-surface (3224) is parallel to the second outer side-surface (3220).

7. The corner key (32) of claim 1 **characterized in that** the corner key (32) further comprises:
a third arm portion (323) having a third outer side-surface (3230);
a third engaging portion (327) disposed on the third outer side-surface (3230);
a fourth arm portion (324) connected to the third arm portion (323) and having
a fourth outer side-surface (3240), the fourth outer side-surface (3240) being unparallel to the third outer side-surface (3230); and
a fourth engaging portion (328) disposed on the fourth outer side-surface (3240).

8. A frame assembly (3) comprising:
a first side frame (30) having a first inner hole (300); and
**characterized by**: a corner key (32) comprising:
a first arm portion (321) having a first outer side-surface (3210);
a first engaging portion (325) disposed on the first outer side-surface (3210);
a second arm portion (322) connected to the first arm portion (321) and
having a second outer side-surface (3220), the second outer side-surface (3220) being unparallel to the first outer side-surface (3210); and
a second engaging portion (326) disposed on the second outer
side-surface (3220);
wherein the first arm portion (321) and the second arm portion (322) are used for assembling into the first inner hole (300).

9. The frame assembly (3) of claim 8 **characterized in that** an angle between a first extending line of the first outer side-surface (3210) and a second extending line of the second outer side-surface (3220) is greater than 0° and less than or equal to 30°.

10. The frame assembly (3) of claim 8 **characterized in that** the first engaging portion (325) is located at a first head end (3211) of the first arm portion (321), the first arm portion (321) has a first section (3212) close to the first engaging portion (325) and a second section (3213) away from the first engaging portion (325), a thickness of the first section (3212) is greater than a thickness of the second section (3213), the second engaging portion (326) is located at a second head end (3221) of the second arm portion (322), the second arm portion (322) has a third section (3222) close to the second engaging portion (326) and a fourth section (3223) away from the second engaging portion (326), and a thickness of the third section (3222) is greater than a thickness of the fourth section (3223).

11. The frame assembly (3) of claim 8 **characterized in that** the corner key further comprises a corner structure (320), the first arm portion (321) and the second arm portion (322) extend from the corner structure (320) respectively, an angle between a first extending line of the first outer side-surface (3210) and a normal line of a side surface (3200) of the corner structure (320) is greater than 0° and less than or equal to 15°, and an angle between a second extending line of the second outer side-surface (3220) and the normal line is greater than 0° and less than or equal to 15°.

12. The frame assembly (3) of claim 8 **characterized in that** the corner key further comprises a corner structure (320), the second arm portion (322) extends from the corner structure (320), the first arm portion (321) extends from the second arm portion (322) and bends toward the corner structure (320), an angle between a first extending line of the first outer side-surface (3210) and a normal line of a side surface (3200) of the corner structure (320) is greater than 0° and less than or equal to 15°, and an angle between a second extending line of the second outer side-surface (3220) and the normal line is greater than 0° and less than or equal to 15°.

13. The frame assembly (3) of claim 8 **characterized in that** the first arm portion (321) further has a first inner side-surface (3214), the first inner side-surface (3214) is parallel to the first outer side-surface (3210), the second arm portion (322) further has a second inner side-surface (3224), and the second inner side-surface (3224) is parallel to the second outer side-surface (3220).

14. The frame assembly (3) of claim 8 **characterized in that** the first side frame (30) has a first engaging slot (301), and the first engaging portion (325) is engaged with the first engaging slot (301) when the first arm portion (321) is assembled into the first inner hole (300).

15. The frame assembly (3) of claim 8 **characterized in that** the frame assembly (3) further comprises:
a second side frame (31) having a second inner hole (310) and a second
engaging slot (311), the corner key (32) further comprising:
a third arm portion (323) having a third outer side-surface (3230);
a third engaging portion (327) disposed on the third outer side-surface (3230);
a fourth arm portion (324) connected to the third arm portion (323) and
having a fourth outer side-surface (3240), the fourth outer side-surface (3240) being unparallel to the third outer side-surface (3230); and
a fourth engaging portion (328) disposed on the fourth outer side-surface (3240);
wherein the third arm portion (323) and the fourth arm portion (324) are used for assembling into the second inner hole (310), and the third engaging portion (327) is engaged with the second engaging slot (311) when the third arm portion (323) is assembled into the second inner hole (310).
